## Europäisches Patentamt
## European Patent Office
## Office européen des brevets

(19)

(11) Veröffentlichungsnummer: **0 093 253**
**B2**

(12) NEUE EUROPÄISCHE PATENTSCHRIFT

(45) Veröffentlichungstag der neuen Patentschrift:
26.09.90

(51) Int. Cl.⁵: **B 01 D 53/26**, B 60 T 17/00

(21) Anmeldenummer: 83102633.1

(22) Anmeldetag: 17.03.83

(54) Steuereinrichtung zur Regenerierung eines Lufttrockners für eine pneumatische Anlage, insbesondere einer Fahrzeugbremsanlage.

(30) Priorität: 05.05.82 DE 3216815

(43) Veröffentlichungstag der Anmeldung:
09.11.83 Patentblatt 83/45

(45) Bekanntmachung des Hinweises auf die
Patenterteilung:
28.05.86 Patenblatt 86/22

(45) Bekanntmachung des Hinweises auf die
Entscheidung u¨ber den Einspruch:
· 26.09.90 Patentblatt 90/39

(84) Benannte Vertragsstaaten:
BE DE FR GB IT NL SE

(56) Entgegenhaltungen:
DE-A-2 048 731      DE-A-3 143 311
DE-A-2 148 571      FR-A-1 418 906
DE-A-2 656 646      FR-A-2 334 404
DE-A-2 718 868      US-A-4 197 095
DE-A-2 938 583

Bosch-Druckschrift "Einleiter
Zentralschmierung", 10/1959
Bosch-Prospekt "VDT-VBB 160/1", 1956

(73) Patentinhaber: KNORR-BREMSE AG
Moosacher Strasse 80 Postfach 401060
D-8000 München 40 (DE)

(72) Erfinder: Gerum, Eduard, Dr.
Strassbergerstrasse 32
D-8000 München 40 (DE)
Erfinder: Kessel, Gerd, Dr.
Lechweg 15
D-8037 Olching (DE)
Erfinder: Saumweber, Eckart, Dr.
Mühlstrasse 15
D-8035 Gauting (DE)
Erfinder: Unger, Hans
St. Benediktstrasse 7
D-8044 Unterschleissheim (DE)

**Beschreibung**

Die Erfindung bezieht sich auf eine Steuereinrichtung gemäß dem Oberbegriff des Anspruches 1.

Es ist eine Steuereinrichtung der vorstehenden Art bekannt, bei der ein Kompressor im Förderbetrieb "Druckluft" über einen Lufttrockner einerseits an einen Hauptluftbehälter und andererseits an einen Hilfsbehälter zur Speicherung einer bestimmten Regenerationsluftmenge angeschlossen ist. Der Hauptluftbehälter ist an einen Druckluftverbraucher, z.B. an eine Druckluftbremsanlage für Nutzfahrzeuge angeschlossen. Im Förderbetrieb des Kompressors werden beide Behälter gefüllt. Beim Erreichen einer gewählten oberen Druckgrenze, z.B. 8 bar, schaltet ein Druckregelventil den Kompressor von dem Lufttrockner ab, wodurch der Kompressor ins Freie fördert. Dabei befindet sich der Kompressor im Leerlaufbetrieb, bis der Druck im Hauptluftbehälter durch Druckluftentnahme für die Bremsanlage auf eine untere Grenze abgesenkt ist, bei der das Druckregelventil den Kompressor erneut an den Lufttrockner anschließt. Im Leerlaufbetrieb des Kompressors ist ein Rückströmen der Druckluft aus dem Hauptluftbehälter in den Lufttrockner durch ein Rückschlagventil oder dergl. unterbunden. Andererseits ist im Leerlaufbetrieb des Kompressors der Hilfsluftbehälter über eine Düse an den Lufttrockner angeschlossen. Durch die Düse wird die als Regenerierungsluft dienende Druckluft aus dem Hilfsluftbehälter entspannt, wodurch der Luftfeuchtigkeitsgrad der Regenerierungsluft weiter erniedrigt wird, bevor sie den Lufttrockner durchströmt, um die im Lufttrockner vorhandene Trocknungssubstanz zu regenerieren. Durch den Hilfsluftbehälter steht für jeden Trocknungsvorgang während eine Leerlaufbetriebes des Kompressors eine durch das Volumen des Hilfsluftbehälters festgelegte bestimmte Regenerierungsluftmenge zur Verfügung, unabhängig davon, ob nach einem Förderzyklus des Kompressors eine größere oder kleinere Regenerierungsluftmenge zur Regenerierung des Luftbehälters erforderlich ist oder nicht. Wird z.B. die an den Hauptbehälter angeschlossene Druckluftbremsanlage in kürzeren Zeitabständen wiederholt betätigt, so werden in entsprechend kürzeren Zeitabständen relativ große Druckluftmengen aus dem Hauptbehälter entnommen, mit der Folge, daß der Kompressor in relativ kürzeren Zeitabständen auf Förderbetrieb geschaltet wird. Die durch den Lufttrockner geleitete Luftmasse ist dabei relativ hoch. Entsprechend hoch ist auch die geförderte Luftmasse pro Zeiteinheit. Es ist klar, daß dabei der Lufttrockner stärker beansprucht ist, so daß die Regenerierungsluftmenge aus dem Hilfsluftbehälter während der kürzeren Abstände zwischen den Förderzyklen des Kompressors zur Regenerierung des Lufttrockners gegebenenfalls nicht ausreicht. Um diesen Nachteil möglichst zu vermeiden, wird das Volumen des Hilfsluftbehälters von vornherein relativ groß gewählt. Das führt jedoch zu dem Nachteil, daß bei relativ geringem Druckluftverbrauch durch die Bremsanlage die Abstände zwischen den einzelnen Förderzyklen des Kompressors entsprechend groß sind und daß demnach trotz geringerer Beanspruchung des Lufttrockners während eines entsprechend längeren Leerlaufzyklus des Kompressors die gesamte Luftmenge aus dem relativ groß bemessenen Hilfsluftbehälter zum Lufttrockner zurückgeleitet wird. Hierdurch kann erhebliche Kompressionsenergie verschwendet werden.

Es ist auch bereits eine Steuereinrichtung zur Regenerierung eines Lufttrockners bekannt (FR—A—2 334 404), bei welcher die Laufzeit des Kompressors mit der Regenerationszeit in ein bestimmtes, durch bekannte Kriterien festgelegtes Verhältnis gebracht ist une eine z.B. mit Impulsen arbeitende Zähleinrichtung verwendet wird, um die absolute Zeit der Regeneration jeweils vorzugeben. Eine individuelle Anpassung des Betriebes an sich verändernde Betriebsbedingungen, wie zeitweilig starker Druckluftbedarf beim Verbraucher, sich pro Zeiteinheit verändernde Drehzahlen am Antriebsmotor oder sich ändernde Temperatureinflüsse, ist bei derartigen Steuereinrichtungen nicht möglich.

Die Aufgabe der Erfindung ist es daher, eine Steuereinrichtung der eingangs genannten Art so weiterzubilden, daß Energieverluste weitgehend vermieden werden. Im einzelnen soll nur eine solche Luftmenge der gespeicherten Druckluft zum Trocknen des Lufttrockner in diesen zurückgeleitet werden, die zur optimalen Trocknung jeweils tatsächlich notwendig ist.

Die Regenerierungsluftmenge soll also den jeweiligen variablen Anforderungen an die Trocknung des Lufttrockners weitgehend angepaßt sein, um auf diese Weise Drucklufterzeugungsenergie einzusparen und gleichzeitig den Druckluftkompressor entsprechend weniger zu beanspruchen.

Die vorstehende Aufgabe wird erfindungsgemäß mit den kennzeichnenden Merkmalen des Anspruches 1 gelöst. Vorteilhafte Ausführungen und Weiterbildungen nach der Erfindung können den Merkmalen der Unteransprüche entnommen werden.

Der Erfindung liegt der Gedanke zugrunde, daß dem Lufttrockner im Leerlaufbetrieb des Kompressors jeweils eine Regenerierungsluftmasse zum Trocknen angeboten wird, die im wesentlichen proportional der im vorangegangenen Förderbetrieb des Kompressors durch den Lufttrockner hindurchgeleiteten Förderluftmasse ist. Sofern aber die Zeitspanne zwischen zwei Förderzyklen des Kompressors zu kurz ist, um die erforderliche Regenerierungsluftmenge durch den Lufttrockner strömen zu lassen, sollen Vorkehrungen getroffen sein, daß der Fehlbetrag an Regenerierungsluftmenge späteren Regenerierungszyklen zugeschlagen wird, um die optimale Trocknung des Lufttrockners bei einem erstbesten längeren Leerlaufzyklus des Kompressors nachholen zu können. Da der Wirkungsgrad der Trocknung des Lufttrockners bei niedrigeren Temperaturen geringer ist als bei höheren Temperaturen, kann außerdem ein Temperaturmesser vorhanden sein, der ein Korrektursignal an die erfindungsgemäße Steuereinrichtung abgibt, so daß die jeweils ermittelte Regenerierungsluftmenge zusätzlich zur Förderleistung des Kompressors auch noch von der gemessenen Außentemperatur abhängt.

Ein Ausführungsbeispiel der Erfindung wird anschließend anhand eines Blockschaltbildes im einzelnen beschrieben.

Mit 1 ist ein Motor bezeichnet, der über ein Getriebe 2 einen Kolbenkompressor 3 antreibt, welcher über eine pneumatische Förderleitung an ein Druckregelventil 4 bekannter Art angeschlossen ist. Dieses überwacht den Druck in einem Druckluftspeicher 5, der an einen nicht näher dargestellten Verbraucher 6, z.B. eine Druckluftbremsanlage eines Fahrzeuges, angeschlossen ist. In eine Förderleitung 7 zwischen einem Druckwächter 4 und dem Druckluftspeicher 5 ist ein an sich bekannter Lufttrockner 8 eingeschlossen, durch den die vom Kolbenkompressor 3 in den Druckluftspeicher 5 geförderte Druckluft hindurchströmt, um dabei weitegehend getrocknet zu werden. In dem Förderleitungsabschnitt 9 zwischen den Lufttrockner und dem Druckluftspeicher befindet sich ein Rückschlagventil 10, das in Richtung der zum Druckluftspeicher strömenden Druckluft öffnet und ein Rückströmen von Druckluft aus dem Druckluftspeicher in den Lufttrockner über den Förderleitungsabschnitt 9 verhindert. Zur Regenerierung des Lufttrockners mit einem dem jeweiligen Trocknungsbedarf angepaßten Anteil der im Druckluftspeicher gespeicherten Druckluft ist eine Anschlußleitung 11 zwischen dem Druckluftspeicher 5 und dem Lufttrockner 8 vorgesehen. In die Anschlußleitung 11 ist ein Magnetventil 12 eingeschaltet. Der Druckwächter 4 in Form eines Druckregelventils besitzt einen Ausgang 4' zur Atmosphäre. Sobald im Druckluftspeicher 5 ein oberer Grenzdruck, z.B. 8 bar vorhanden ist, schaltet der Druckwächter 4 die Verbindung vom Kolbenkompressor 3 zum Lufttrockner 8 ab und leitet die vom Kolbenkompressor geförderte Druckluft über seinen Ausgang 4' zur Atmosphäre. Solange der Kompressor über den Lufttrockner Druckluft in den Druckluftspeicher fördert, befindet er sich im sogenannten Förderbetrieb. Wird dagegen die vom Kompressor geförderte Druckluft über den Ausgang 4' des Druckwächters 4 ins Freie geleitet, befindet er sich im Leerlaufbetrieb. Je nach dem Luftverbrauch des Verbrauchers 6 innerhalb einer bestimmten Zeitspanne ist ein Förderzyklus des Kompressors zum Aufladen des Druckluftspeichers 5 bis zum Erreichen der oberen Druckgrenze länger oder kürzer. Entsprechend unterschiedlich lang können die Leerlaufzyklen des Kompressors sein, während derer er vom Lufttrockner abgeschaltet ist.

Mit 13 ist ein Sensor in Form eines Drehzahlmessers des Motors 1 bezeichnet. Die Drehzahl des Motors 1 steht in einem bestimmten Verhältnis zu der Anzahl der Kolbenhübe des Kolbenkompressors 3. Da die vom Kompressor in einer Zeiteinheit geförderte Luftmasse durch die entsprechende Anzahl der Kolbenhübe, multipliziert mit dem Zylindervolumen, bestimmt ist, ist auch durch die Drehzahl des Motors 1 die geförderte Luftmasse des Kolbenkompressors 3 errechenbar. Der bei höheren Drehzahlen des Motors verringerte Füllungsgrad eines Kompressorzylinders kann für den vorliegenden Steuerungszweck vernachlässigt werden.

Statt die Drehzahl des Motors zu messen, kann auch die Kolbenhubzahl des Kompressors gezählt werden. Es kann einfacher sein, am Motor einen Drehzahlmesser anzubringen als einen Kompressor mit einem kontaktlosen Sensor zum Zählen der Hubzahl auszurüsten. Das gilt vor allem dann, wenn ein Kolben eines Motors als Kompressor läuft, der Kompressor also im Motor integriert ist.

Der Deruckwächter ist mit einem pneumatisch gesteurten, Druckschalter mit elektrischem Ausgangssignal, z.B. einem Schaltelement 14 in Form eines Mikroschalters, versehen, der den Betriebszustand "Fördern" oder "Leerlauf" meldet.

Mit 16 ist ein elektrisches Steuergerät bezeichnet, das die Signale des Sensors 13 und des Schaltelements 14 über elektrische Signalleitungen 15 bzw. 17 aufnimmt. Über eine elektrische Leitung 18 ist das elektrische Steuergerät 16 an das Magnetventil 12 angeschlossen. Außerdem ist das Steuergerät 16 über eine Signalleitung 19 mit einem Temperaturmesser 20 verbunden. In dem elektrischen Steuergerät werden die Signale des Sensors zur Messung der Drehzahl, des Temperaturmessers und des Magnetventils verarbeitet, um Ausgangssignale zu bilden, die zur Steuerung des Magnetventils 12 diesem über die Signalleitung 18 aufgegeben werden.

Gibt das Schaltelement 14 das Signal "Fördern" an das Steuergerät 16, so werden die Signale des Sensors 13 im Steuergerät gezählt und die entsprechende Kolbenhubzahl errechnet, die in einem Speicher eingelesen wird. Außerdem nimmt das Steuergerät das Temperatursignal des Temperaturmessers 20 als Korrektursignal entgegen. Gibt das Schaltelement 14 anschließend das Signal "Leerlauf" an das Steuergerät 16, so word über die Leitung 18 das magnetventil 12 erregt, das daraufhin in seine Öffnungsstellung geht. Mit der Erregung des Magnetventils 12 zu Beginn einer Leerlaufphase des Kolbenkompressors 3 beginnt auch die Regenerierungsphase des Lufttrockners 8. Hierzu strömt Luft aus dem Druckluftspeicher 5 über die Anschlußleitung 11 und eine Düse, welche durch den vom Magnetventil freigegebenen Öffnungsquerschnitt bestimmt ist, in den Lufttrockner 8, um diesen zu regenerieren. Gleichzeitig mit der Erregung des Magnetventils 12 werden die Impulse eines Oszillators im Steuergerät vom gespeicherten Zählerstand für die Kolbenhübe des Kompressors subtrahiert. Dabei bleibt das Magnetventil solange erregt, bis der Zählerstand 0 erreicht ist (Ende der Regenerierungsphase des Lufttrockners) oder das Schaltelement 14 erneut den Betriebszustand "Fördern" meldet.

Wurde während einer Leerlaufphase des Kompressors im Steuergerät der Zählerstand 0 erreicht, so gibt das Steuergerät über die Leitung 18 ein Abschaltsignal an das Magnetventil 12, das dabei in seine Absperrstellung gelangt, in der die pneumatische Anschlußleitung 11 zwischen dem Druckluftspeicher 5 und dem Lufttrockner 8 unterbrochen ist. Sobald dann durch einen Luftverbrauch des Verbrauchers 6 der Druck in dem Druckluftspeicher 5 unter eine vorgegebene untere Druckgrenze fällt, schaltet der Druckwächter den Kompressor wieder an den Lufttrockner an und das Schaltelement meldet dem Steuergerät den Betriebszustand "Fördern". Wahrend der Leerlaufphase des Kolbenkompressors 3 bleiben die Drehzahlsignale des Drehzahlmessers vom Steuergerät 16 unberücksichtigt.

Meldet dagegen das Schaltelement 14 den Betriebszustand "Fördern", bevor im Steuergerät der Zählerstand 0 erreicht ist, so wird bereits zu diesem Zeitpunkt von dem Steuergerät 16 ein Abschaltsignal an das Magnetventil 12 gegeben, das dabei in seine Absperrstellung gelangt. Gleichzeitig werden die dem Steuergerät zugeleiteten Signale des Drehzahlmessers wieder registriert und die entsprechende Kolbenhubzahl ermittelt, die zum verbliebenen Zählerstand im Speicher hinzuaddiert wird.

Bei einer vorgegebenen maximalen Drehzahl des Motors 1 entsprechend einer maximalen Hubzahl des Kompressors, wird außerdem von dem Steuergerät 16 über eine Leitung 22 ein Signalgeber 23 eingeschaltet, der erst bei Erreichen des Zählerstandes 0 im Steuergerät, d.h. bei einer vollständigen Regenerierung des Lufttrockners vom Steuergerät wieder gelöscht wird. Der Signalgeber 23 kann auch ein Warnsignal abgeben, das einen zu raschen Druckluftverbrauch des Verbrauchers 6, z.B. aufgrund einer Undichtigkeit einer pneumatischen Leitung anzeigt. Die Folge einer solchen Undichtigkeit ist, daß die Leerlaufzyklen des Kompressors zwischen seinen Förderzyklen so kurz ausfallen, daß der vom Steuergerät gespeicherte Zählerstand während eines Leerlaufzyklus nicht mehr auf 0 zurückgezählt werden kann.

Das an das Steuergerät 16 abgegebene Temperatursignal des Temperaturmessers 20 kann z.B. dazu verwendet werden, die Frequenz des Oszillators entsprechend zu ändern. So wird bei tieferen Temperaturen die im Speicher gespeicherte Kolbenhubzahl langsamer rückwärts gezählt als bei höheren Temperaturen. Entsprechend ist dann auch die Öffnungszeit des Magnetventils während einer Regenerierungsphase des Lufttrockners verlängert bzw. verkürzt.

Das Temperatursignal kann aber auch als Faktor benutzt werden, mit dem die Sume der ermittelten Kolbenhübe des Kompressors im Steuergerät 16 multipliziert wird, so daß eine fiktive Kolbenhubzahl errechnit wird, die bei höheren Temperaturen kleiner ist als bei niedrigeren Temperaturen.

Auf diese Weise wird vom Steuergerät 16 jeweils nur die notwendige Regenerierungsluftmenge in Abhängigkeit von der gemessenen Außentemperatur und dem dadurch gegebenen Trocknungswirkungsgrad des Lufttrockners und der vorangegangenen Förderleistung des Kompressors ermittelt.

Die Erfindung ist nicht auf das vorstehende Ausführungsbeispiel beschränkt; so kann es z.B. bei Kraftfahrzeugbremsen vorteilhaft sein, den über das Getribe 2 an den Motor 1 angekuppelten Kompressor 3 bei Erreichen der oberen Druckgrenze im Druckluftspeicher 5 vom Motor 1 abzukuppeln. Hierzu kann eine druckabhängig selbsttätig schaltbare Kupplung zwischen dem Motor 1 und dem Kompressor 3 vorhanden sein, wie sie z.B. durch das Europäische Patent 45 867(Veröffentlichungstag der entsprechenden Anmeldung: 17-02-82) bekannt ist. Zum pneumatischen Schalten der Kupplung kann der Druckwächter 4 dienen. Anstelle des Drehzahlmessers am Motor wird dann, wie vorstehend beschrieben, am Kompressor ein Sensor zur Zählung der Kolbenhubzahl des Kompressors angebracht.

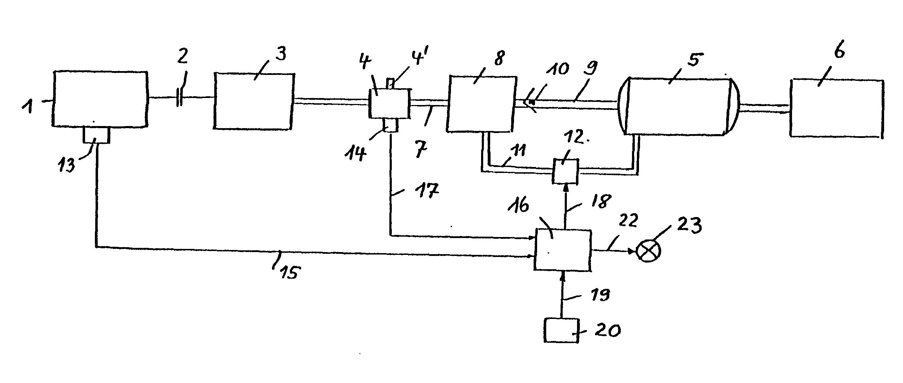

## Patentansprüche

1. Steuereinrichtung zur Regenerierung eines Lufttrockners (8) der in einer pneumatischen Förderleitung zwischen einem an einen Druckluftverbraucher mit variablen Druckluftverbrauch angeschlossenen Druckluftspeicher (5) und einem von einem Motor (1) angetriebenen Kolbenkompressor (3) eingeschaltet ist, mit einem Druckwächter (4), der beim Erreichen eines vorgegebenen oberen Grenzdruckes im Druckluftspeicher (5) die Druckluftförderung aus dem Kolbenkompressor (3) über den Lufttrockner (8) in den Druckluftspeicher (5) abschaltet und beim Abfallen des Druckes im Druckluftspeicher (5) bis auf einen unteren Grenzwert die Druckluftförderung üben den Lufttrockner (8) erneut an den Druckluftspeicher (5) anschließt, und mit einer pneumatischen Anschlußleitung (11) zum zusätzlichen Anschluß des Lufttrockners (8) an den Druckluftspeicher (5), von dem bei abgeschalteter Druckluftförderung ein abgezweigter Anteil der gespeicherten Druckluft mittels der Anschlußleitung (11) nach Maßgabe eines Zeitgliedes (12, 13, 14, 16) in den Lufttrockner (8) als Regenerierungsluftmenge zurückgeleitet wird, dadurch gekennzeichnet, daß am Kolbenkompressor (3) oder am Motor (1) ein die Kolbenhübe des Kompressors bzw. die Umdrehungszahl des Motors zählender Sensor (13) vorgesehen ist, dessen jeweiliger Zählerstand ein Maß für die durch den Lufttrockner zum Druckluftspeicher geförderte Druckluftmasse ist, daß das Zeitglied (12, 13, 14, 16) in Abhängigkeit von der durch den Lufttrockner (8) zum Druckluftspeicher (5) geförderten Druckluftmasse variabel ist und daß in der Anschlußleitung (11) ein Magnetventil (12) als Bestandteil des Zeitgleids eingeschaltet ist, wobei das Magnetventil (12) in seiner Öffnungsstellung die Verbindung vom Druckluftspeicher (5) zum Lufttrockner (8) freigibt, und die Öffnungsstellung des Magnetventils (12) von einem Steuergerät (16) überwacht ist, derart, daß die Öffnungszeitdauer des Magnetventils (12) bei abgeschalteter Druckluftförderung und bei einer bestimmten Trocknungsleistung des Lufttrockners eine Funktion des Sensorzählerstandes ist.

2. Steuereinrichtung nach Anspruch 1, dadurch gekennzeichnet, daß zur Bestimmung der jeweiligen Einschaltdauer des Magnetventils (12) die Impulse eines Oszillators des Steuergerätes (16) von dem gespeicherten Zählerstand des Sensors (13) subtrahiert werden und daß der Einschaltzustand des Magnetventils (12) aufrechterhalten bleibt, bis der gespeicherte Zählerstand den Wert Null aufweist oder ein Signal des Druckwächters den Beginn eines neuen Förderzyklus des Kolbenkompressors (3) anzeigt, wobei gleichzeitig die Druckluftförderung des Kolbenkompressors (3) wieder an den Lufttrockner (8) angeschaltet und die Zahl der Kolbenhübe bzw. der Umdrehungen des Motors (1) erneut gezählt und zu dem gegebenenfalls noch verbliebenen Zählerstand aufsummiert werden.

3. Steuereinrichtung nach Anspruch 2, dadurch gekennzeichnet, daß die Frequenz des Oszillators variabel einstellbar ist.

4. Steuereinrichtung nach einem der vorstehenden Ansprüche, dadurch gekennzeichnet, daß der Druckwächter (4) ein elektrisches Schaltelement (14) beinhaltet, das bei eingeschaltetem Förderbetrieb des Kolbenkompressors (3) sich in seiner einen Schaltstellung befindet, in der das Magnetventil (12) in seine Schließstellung gesteurt ist und in der die Impulse des Sensors (13) zur Ermittlung der Kolbenhübe des Kolbenkompressors (3) bzw. der Umdrehungszahl des Motors (1) vom Steuergerät (16) gezählt werden, und das im Leerlaufbetrieb des Kolbenkompressors (3) sich in seiner anderen Schaltstellung befindet, in der das Magnetventil (12) in seine Öffnungsstellung gesteuert ist und die Impulse des Sensors (13) im Steuergerät unberücksichtigt bleiben, während die Impulse des Oszillators von der gespeicherten Summe subtrahiert werden, bis entweder das elektrische Schaltelement (14) in seine entgegengesetzte Schaltstellung umgeschaltet ist oder der Zählerstand des Steuergerätes (16) Null ist.

5. Steuereinrichtung nach Anspruch 3 oder 4, dadurch gekennzeichnet, daß das Steuergerät (16) bei einer vorgegebenen maximalen Hubzahl des Kolbenkompressors (3) ein Signal (Warnsignal) abgibt, das erst beim Erreichen des auf Null zurückgezählten Zählerstandes des Steuergerätes (16) gelöscht wird.

6. Steuereinrichtung nach einem der vorstehenden Ansprüche, dadurch gekennzeichnet, daß ein Temperaturmesser (20) vorhanden ist, der ein der Umgebungstemperatur entsprechendes Signal an das Steuergerät (16) zur Korrektur der Frequenz des Oszillators oder zur multiplikativen Errechnung einer fiktiven Kolbenhubzahl im Steuergerät (16) und damit der vom Steuergerät überwachten Öffnungszeitdauer des Magnetventils (12) abgibt.

7. Steuereinrichtung nach einem oder mehreren der vorstehenden Ansprüche, dadurch gekennzeichnet, daß der Druckwächter (4) mit dem elektrischen Schaltelement (14) und dem Lufttrockner (8) eine Baueinheit (4, 8, 14) bilden.

8. Steuereinrichtung nach einem der vorangehenden Ansprüche, dadurch gekennzeichnet, daß der Sensor (13) zur Messung der Drehzahl des Motors (1) ein Hallgenerator ist.

**Revendications**

1. Dispositif de commande pour la régénération d'un déshumidificateur d'air (8) qui est monté dans une conduite de refoulement pneumatique, entre un accumulateur d'air comprimé (5) relié à un dispositif consommateur d'air comprimé à consommation variable d'air comprimé, et un compresseur à piston (3) entraîné par un moteur, avec un régulateur de pression (4) qui, lorsqu'une pression-limite supérieure et prédéterminée dans l'accumulateur d'air comprimé (5) est atteinte, interrompt le refoulement d'air comprimé s'écoulant du compresseur à piston (3), par l'intermédiaire du déshumidificateur d'air (8), dans l'accumulateur d'air comprimé (5), et qui, lorsque la pression dans l'accumulateur d'air comprimé (5) chute jusqu'à une valeur-limite inférieure, rétablit à nouveau le passage d'air comprimé dans l'accumulateur d'air comprimé (5), par l'intermédiaire du déshumidificateur d'air (8), et avec une conduite pneumatique de liaison pour relier, de plus, le déshumidificateur d'air (8) à l'accumulateur d'air comprimé (5), à partir duquel, et lorsque le transport d'air comprimé est interrompu, une partie dérivée de l'air comprimé accumulé est envoyée, à l'aide d'une conduite de raccordement (11) et en fonction de l'état d'un dispositif de temporisation (12, 13, 14, 16), dans le déshumidificateur d'air (8) en tant que quantité d'air de régénération, caractérisé par le fait qu'il est prévu sur le compresseur à piston (3) ou sur le moteur (1) un capteur (13) qui compte les courses du piston du compresseur ou le nombre de tours du moteur et dont l'état de comptage est une mesure pour la masse d'air comprimé envoyée par le déshumidificateur à l'accumulateur d'air comprimé, et que le dispositif de temporisation (12, 13, 14, 16) est variable en fonction de la masse d'air comprimé envoyée par le déshumidificateur (8) à l'accumulateur d'air comprimé (5) et que dans la conduite de raccordement (11) est montée, en tant qu'élément constitutif du dispositif de temporisation, une électrovanne (12) qui, dans sa position d'ouverture, autorise la liaison entre l'accumulateur d'air comprimé (5) et le déshumidificateur (8), alors que la position d'ouverture de l'électrovanne (12) est contrôlée par un appareil de commande (16) de manière que la durée d'ouverture de l'électrovanne (12) soit une fonction de l'état de comptage du capteur lorsque le transport d'air comprimé est interrompu et pour une puissance déterminée de séchage du déshumidificateur d'air.

2. Dispositif de commande selon la revendication 1, caractérisé par le fait que pour déterminer la durée de branchement de l'électrovanne (12) on déduit les impulsions d'un oscillateur de l'appareil de commande (16) de l'état de comptage mémorisé du capteur (13), et que l'état branché de l'électrovanne (12) est maintenu jusqu'à ce que l'état de comptage mémorisé présente la valeur zéro ou qu'un signal du régulateur de pression signale le début d'un nouveau cycle de refoulement du compresseur à piston (3), le refoulement simultané de l'air comprimé du compresseur à piston (3) étant à nouveau autorisé pour le déshumidificateur d'air (8) et le nombre de courses du piston ou le nombre de rotations du moteur (1) étant à nouveau compté et ajouté à l'état de comptage qui éventuellement subsiste encore.

3. Dispositif de commande selon la revendication 2, caractérisé par le fait que la fréquence de l'oscillateur est réglable de façon variable.

4. Dispositif de commande selon l'une des revendications précédentes, caractérisé par le fait que le régulateur de pressions (4) comporte un élément électrique de commutation (14) qui, lorsque le compresseur à piston (3) est dans son état de fonctionnement, se situe dans l'une de ses positions de commutation dans laquelle l'électrovanne (12) est commandée dans sa position de fermeture et dans laquelle les impulsions du capteur (13) servant à déterminer les courses du piston du compresseur à piston (3) ou le nombre de tours du moteur (1), sont comptées par l'appareil de commande (16), et qui, dans l'état de fonctionnement à vide du compresseur à piston (3), se trouve dans son autre position de commutation dans laquelle l'électrovanne (12) est commandée dans sa position d'ouverture et que les impulsions du capteur (13) ne sont pas prises en compte dans l'appareil de commande, alors que les impulsions de l'oscillateur sont soustraites de la somme mémorisée jusqu'à ce que l'élément électrique de commutation (14) soit commuté dans son état de commutation opposé ou jusqu'à ce que l'état de comptage de l'appareil de commande (16) soit égal à zéro.

5. Dispositif de commande selon la revendication 3 ou 4, caractérisé par le fait que l'appareil de commande (16) émet, pour un nombre maximum de courses prédéterminé du compresseur à piston (3) un signal (signal d'alarme) qui n'est supprimé que lorsque l'état de comptage de l'appareil de commande (16) est décompté à la valeur zéro.

6. Dispositif de commande selon l'une des revendications précédentes, caractérisé par le fait qu'il est prévu un dispositif de mesure de la température (20) qui émet à l'appareil de commande (16) un signal qui correspond à la température ambiante, en vue de la correction de la fréquence de l'oscillateur ou en vue du calcul multiplicatif d'un nombre fictif de courses du piston dans l'appareil de commande (16), et, par voie de conséquence, de la durée d'ouverture de l'électrovanne (12) qui est contrôlée par l'appareil de commande.

7. Dispositif de commande selon une ou plusieurs des revendications précédentes, caractérisé par le fait que le régulateur de pression (4) constitue une unité de construction (4, 8, 14) avec l'élément électrique de commutation (14) et le déshumidificateur d'air (8).

8. Dispositif de commande selon l'une des revendications précédentes, caractérisé par le fait que le capteur (13) servant à la mesure du nombre de tours du moteur (1) est un générateur de Hall.

**Claims**

1. Control device for the regeneration of an air dryer (8) which is connected in a pneumatic supply line between a compressed air store (5) connected to a compressed air consumer with variable compressed air consumption, and a piston compressor (3) driven by a motor (1), having a pressure monitor (4) which, when a predetermined upper pressure limit is reached in the compressed air store (5), disconnects the compressed air supply from the piston compressor (3) via the air dryer (8) into the compressed air store (5) and, when the pressure in the compressed air store (5) drops to a lower limit value, again connects the compressed air supply via the air dryer (8) to the compressed air store (5), and having a pneumatic connection line (11) for the additional connection of the air dryer (8) to the compressed air store (5) from which, when the compressed air supply is disconnected, a branched part of the stored compressed air is conveyed back into the air dryer (8) as a regeneration air amount by means of the connection line (11) in accordance with a timing circuit (12, 13, 14, 16), characterised in that on the piston compressor (3) or on the motor (1) there is provided a sensor (13) counting the piston strokes of the compressor or the number of revolutions of the motor, the respective meter state of which is a standard for the amount of compressed air supplied through the air dryer to the compressed air store, in that the timing circuit (12, 13, 14, 16) is variable in dependence on the amount of compressed air supplied by the air dryer (8) to the compressed air store (5) and in that in the connection line (11) there is connected a solenoid valve (12) as a component of the timing circuit, whereby the solenoid valve (12) in its open position releases the connection from the compressed air store (5) to the air dryer (8), and the open position of the solenoid valve (12) is monitored by a control device (16) so that the duration of the open time of the solenoid valve (12) is a function of the sensor meter state when the compressed air supply is disconnected and with a specific drying capacity of the air dryer.

2. Control device according to claim 1, characterised in that for determining the respective switch-on period of the solenoid valve (12) the pulse of an oscillator of the control device (16) are subtracted from the stored meter state of the sensor (13) and in that the switch-on state of the solenoid valve (12) is maintained until the stored meter state has the value zero or a signal of the pressure monitor indicates the beginning of a new supply cycle of the piston compressor (3), whereby at the same time the compressed air supply of the piston compressor (3) is again connected to the air dryer (8) and the number of piston strokes or revolutions of the motor (1) are again counted and are added up to the meter state if need be still remaining.

3. Control device according to claim 2, characterised in that frequency of the oscillator is variably adjustable.

4. Control device according to one of the preceding claims, characterised in that the pressure monitor (4) contains an electric switch element (14) which, when the supply drive of the piston compressor (3) is connected, is located in one of its switch positions in which the solenoid valve (12) is controlled into its closure position and in which the pulses of the sensor (13) for determining the piston strokes of the piston compressor (3) or the number of revolutions of the motor (1) are counted by the control device (16), and which, when the piston compressor (3) is in its idling drive, is located in its other switch position in which the solenoid valve (12) is controlled into its open position, and the pulses of the sensor (13) remain disregarded in the control device, whilst the pulses of the oscillator are subtracted from the stored sum until either the electric switch element (14) is switched into its opposite switch position or the meter state of the control device (16) is zero.

5. Control device according to claim 3 or 4, characterised in that the control device (16), at a predetermined maximum number of strokes of the piston compressor (3), emits a signal (warning signal) which is not extinguished until the meter state of the control device (16) has been counted back to zero.

6. Control device according to one of the preceding claims, characterised in that there is a temperature gauge (20) which emits a signal, corresponding to the ambient temperature, to the control device (16) for correcting the frequency of the oscillator or for the multiplicative calculation of a theoretical number of piston strokes in the control device (16), and hence of the period of opening of the solenoid valve (12) monitored by the control device.

7. Control device according to one or several of the preceding claims, characterised in that the pressure monitor (4) with the electric switch element (14) and the air dryer (8) form a structural unit (4, 8, 14).

8. Control device according to one of the preceding claims, characterised in that the sensor (13) for measuring the speed of the motor (1) is a Hall generator.

EP 0 093 253 B2